# EUROPÄISCHE PATENTSCHRIFT

(11) **EP 0 651 031 B1**
(45) Veröffentlichungstag und Bekanntmachung des Hinweises auf die Patenterteilung: **12.03.1997**
(21) Anmeldenummer: 94116231.5
(22) Anmeldetag: 14.10.1994
(51) Int. Cl.: C09C 3/04, C09C 1/36, C09C 3/08, C09C 3/12

(54) **Verfahren zur Einfärbung von organischen Medien**
Process for colouring organic mediums
Procédé de coloration de milieux organiques

(30) Priorität: 27.10.1993 DE 4336612
(43) Veröffentlichungstag der Anmeldung: 03.05.1995
(73) Patentinhaber: BAYER AG, 51368 Leverkusen (DE)
(72) Erfinder: Linde, Günter, Dr., D-47800 Krefeld (DE); Eitel, Manfred, Dr., D-47906 Kempen (DE)

(56) Entgegenhaltungen:
- EP-A- 0 257 423
- EP-A- 0 373 426
- EP-A- 0 418 683
- EP-A- 0 567 882
- FR-A- 2 692 587
- US-A- 4 102 967

## Beschreibung

Die vorliegende Erfindung betrifft ein Verfahren zur Einfärbung von organischen Medien durch anorganische Pigmentgranulate.

Die Verarbeitung von Pigmenten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und kleben in Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen wie z.B. Eisenoxidpigmenten ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung von organischen Medien ist deshalb das Ziel im Umgang mit Pigmenten. Dieses Ziel wird mehr oder weniger durch Anwendung von Granulationsverfahren auf Pigmente erreicht. Dabei werden Aufbau- oder Sprühgranulation im allgemeinen angewendet. Kompaktierverfahren sind bisher wegen der eingeschränkten Dispergierbarkeit der dadurch erhaltenen Granulate weniger geeignet.

Grundsätzlich werden bei Pigmenten vom Markt zwei sich in der Richtung gegensätzliche Eigenschaften beim Einsatz von Pigmentgranulaten gefordert: mechanische Stabilität des Granulats und gute Dispergiereigenschaften. Die mechanische Stabilität ist verantwortlich für gute Transporteigenschaften sowohl bei Transport zwischen Hersteller und Anwender als auch für gute Dosierung und Fließeigenschaften beim Einsatz der Pigmente. Sie wird durch hohe Haftkräfte bewirkt und hängt ab z.B. von Bindemittelmenge oder auch vom Preßdruck beim Verformen. Andererseits wird die Dispergierbarkeit beeinflußt durch eine gute Mahlung vor der Granulierung (Naß- und Trockenmahlung), die mechanische Energie bei der Einarbeitung (Scherkräfte) und Dispergierhilfsmittel, die die Haftkräfte im trockenen Granulat bei der Einarbeitung in ein Medium sofort herabsetzen. Allerdings ist bei Pigmenten die Anwendung von größeren Mengen Dispergierhilfsmittel wegen des Kostenverhältnisses Zusatz/Pigment eingeschränkt. Außerdem bewirkt ein hoher Zusatzanteil eine entsprechende Herabsetzung der Farbstärke bzw. des Streuvermögens. Da die Farbstärkeschwankungen im allgemeinen unter ±5 % liegen, ist auch der Einsatz von Zusatzstoffen begrenzt, selbst wenn diese gleichzeitig als Haftvermittler und Dispergierhilfsmittel wirken. Auch dürfen die Zusätze nicht die Gebrauchseigenschaften der zu färbenden Medien nachteilig verändern, beispielsweise bei Kunststoffen die Festigkeit oder die Kerbschlagzähigkeit, bei Elastomeren (Polymeren) die elastischen Eigenschaften.

Nach dem Stand der Technik kommen als Herstellungsverfahren für Pigmentgranulate Sprühgranulation (Sprühtrocknung über Scheibe oder Düse) und Aufbaugranulation (Mischer, Wirbelschichtgranulator, Teller bzw. Trommel) in Frage.

So wird in den EP-A 0 257 423 und DE-A 3 841 848 die Sprühgranulation unter Verwendung von Polyorganosiloxanen als hydrophobe, lipophile Zusatzstoffe beschrieben. Der erwähnte Zerstäubungstrockner führt im allgemeinen zu kleinen Teilchengrößen, d.h. hohem Feinanteil. Das bedeutet, daß ein wesentlicher Anteil des Materials nicht aus dem Trockner als direkt einsetzbares Granulat erhalten wird, sondern als Feinanteil erst im Filter zurückgehalten wird und dann in den Prozeß zurückgeführt werden muß.

Die hydrophobierende Nachbehandlung führt bei sprühgranulierten Produkten zu einem sehr guten fließenden, aber außerordentlich stark staubenden Granulat.

Die EP-A 0 424 896 offenbart die Herstellung von staubarmen Feingranulaten in einem Herstellungsgang in bekannten Intensivmischern. Es wird hierbei ein niedriger Gehalt an Wachsen in Kombination mit Emulgator und Netzmitteln durch Aufbringen einer wäßrigen Dispersion angewendet. Dabei werden im allgemeinen Wassergehalte von 20 bis über 50 % erhalten. Diese Granulate müssen zunächst getrocknet und von Über- und Unterkorn getrennt werden.

Die DE-A 31 32 303 beschreibt staubarme, fließfähige anorganische Pigmentgranulate, die mit unter Wärmeeinwirkung flüssigwerdenden Bindemitteln gemischt und durch einen Siebvorgang unter Anwendung von Siebhilfe (Druck) granuliert werden. Dabei fällt ca. 10 bis 20 % des Durchsatzes als Feinanteil <0,1 mm an.

Aus der EP-A 0 144 940 gehen staubarme Pigmentgranulate hervor, die ausgehend von Filterschlamm mit ca. 50 % Wasser durch Zugabe von 0,5-10 % oberflächenaktiven Stoffen und zusätzlich Mineralöl oder flüssigwerdenden Wachsen bei 50 bis 200°C gemischt werden bis zum Schmierpunkt. Der Vorgang erfolgt in Intensivmischern, eventuell wird noch nachgranuliert und nachgetrocknet. Im Endprodukt liegt noch Wasser in einer Menge von 10 bis 15 % vor, was für die Einarbeitung in Kunststoffen nachteilig ist.

EP-A 567 822 beschreibt ein Verfahren zur Einfärbung von Asphalt und/oder Bitumen mit anorganischen Pigmentgranulaten, wobei die Granulate aus anorganischen Pigmenten unter Zusatz von Ölen, die eine kinematische Viskosität bei 40°C von 1,6 bis 1.500 mm²/s aufweisen, und/oder Wachsen, Polyolen, Polyethern und Paraffinen mit Tropfpunkten zwischen 50 und 180°C als Bindemittel und anschließender Granulierung der Mischung hergestellt werden.

Auch die anderen Verfahren sind in ihrer Anwendung eingeschränkt. Die Sprühgranulation erfordert wegen der Tropfenbildung die Verwendung von gut fließfahigen, also dünnflüssigen, Suspensionen. Für den Trocknungsvorgang ist somit eine größere Menge an Wasser zu verdampfen als bei der häufig einsetzbaren Wirbelschichttrocknung aus hochausgepreßten Pigmentfilterpasten. Dies führt zu höheren Energiekosten. Bei zuvor durch Kalzination hergestellten Pigmenten bedeutet die Sprühgranulation einen zusätzlichen Verfahrensschritt mit hohen Energiekosten. Außerdem fällt bei der Sprühgranulation ein mehr oder weniger großer Anteil an Feinmaterial im Staubfilter an, der wieder in die Produktion zurückgeführt werden muß.

Die Aufbaugranulation weist häufig auch Nachteile auf. Sie kann - ausgehend von Pigmentpulver - in Mischern unter hoher Turbulenz, im Wirbelschichtverfahren oder auch durch Teller- und Trommelgranulation durchgeführt werden. Allen diesen Verfahren gemeinsam ist, daß der Bindemittelbedarf, meistens Wasser, groß ist, so daß als zusätzlicher Verfahrensschritt eine Trocknung nachfolgen muß.

Auch werden hierbei Granulate unterschiedlicher Größe erhalten, insbesondere, wenn nicht ausreichend Bindemittel für die Pulvermenge zur Verfügung steht oder die Verteilung nicht optimal ist. Dann kann ein gewisser Anteil als Granulat zu groß werden, während andererseits zu kleine und damit noch staubende Anteile vorliegen. Deshalb ist eine Klassierung der entstehenden Granulate erforderlich mit einem Rücklauf von Über- und Unterkorn.

Die Tellergranulation führt zu einem breiten Teilchengrößenspektrum von Granulaten. Wo dies wegen der schlechten Dispergierbarkeit zu großer Teilchen nicht erwünscht ist, muß durch intensive personelle Überwachung der Granuliervorgang verfolgt werden und durch manuelle Steuerung der Keimmenge die Granulatherstellung optimiert werden. Üblicherweise erfolgt auch hierbei eine Klassierung mit Rückführung des Über- und Unterkorns.

Aufgabe der vorliegenden Anmeldung war es aber, ein Verfahren zur Einfärbung von organischen Medien zur Verfügung zu stellen, das die bisher beschriebenen Nachteile der Sprühgranulation oder der Aufbaugranulation in ihrer Anwendung auf anorganische Pigmente vermeidet und ausreichend stabile, dosierfähige, staubarme Granulate von gleich guter Dispergierbarkeit wie die bisher verwendeten Pulver zur Verfügung stellt. Darüber hinaus sollte eine Klassierung mit Rückführung von Über- und Unterkorn vermieden werden.

Es wurde nun gefunden, daß diese Aufgabe gelöst werden kann durch eine mehrstufige Kombination der Verfahrensschritte Mischen, Kompaktieren, Siebgranulieren und Tellergranulieren.

Gegenstand dieser Erfindung ist somit ein Verfahren zur Einfärbung von organischen Medien mit anorganischen Pigmentgranulaten, wobei anorganische Pigmente in einem mehrstufigen Verfahren unter Zusatz von Ölen, die eine kinematische Viskosität bei 40°C von 1,6 bis 1500 mm²/s aufweisen, als Bindemittel zu Pigmentgranulaten einer mittleren Teilchengröße von 0,2 bis 2 mm ohne Rückführung von Feinanteil granuliert werden, indem die anorganischen Pigmente mit den Ölen in einem Mischer zusammengegeben werden, das so vorbehandelte Pigmentpulver einem Kompaktierungsschritt mit Linienkräften zwischen 0,1 und 15 kN/cm unterworfen wird, die dabei entstehenden Schülpen einer Dichte von 0,5 bis 3,0 g/cm³ durch nachfolgendes Schroten auf einem Siebgranulator in Vorgranulat und Pulver zerlegt und diese durch Nachrollen auf einem Drehteller oder in einer Drehtrommel vollständig aufgranuliert werden, und die anorganischen Pigmentgranulate mit den organischen Medien vermischt werden.

Nach dem erfindungsgemäßen Verfahren ist ein Pigmentgranulat erhältlich, das sich bei einem d₅₀ von 0,2 bis 2 mm problemlos in organische Medien einarbeiten läßt.

Bevorzugte anorganische Pigmente im Sinne dieser Erfindung sind Eisenoxid-, Titandioxid-, Chromoxid und/oder Rutilmischphasenpigmente.

Als Bindemittel werden die Haftungskräfte (Kohäsion) verbessernde Substanzen verwendet. Als solche stehen Wasser und wäßrige Lösungen zur Verfügung. Auch können Öle unterschiedlicher Herkunft zur Anwendung kommen. Neben technischen oder synthetischen Ölen wie z.B. Maschinenöl V 100 oder Silikonöle (Polysiloxane) lassen sich auch biologisch abbaubare Öle pflanzlicher und tierischer Herkunft wie Rapsöl, Sojabohnenöl, Maiskeimöl, Olivenöl, Kokosnußöl, Sonnenblumenöl oder Tran einsetzen.

Bevorzugte Ausführungsformen sind in den Unteransprüchen angeführt.

Wesentlich bei dem erfindungsgemäßen mehrstufigen Granulationsverfahren ist, daß im ersten Schritt ein ausreichend kohäsives homogenes Material durch Zugabe des Bindemittels in einem Mischer erzeugt wird. Im zweiten Schritt erfolgt bevorzugt eine Kompaktierung.

Die verfahrenstechnisch wichtigste Kennziffer hierbei ist die Preßkraft (kN) pro cm Walzenbreite (Linienkraft). Beim Kompaktieren wird von einer linienförmigen Übertragung der Preßkraft ausgegangen, da eine Preßfläche nicht definiert werden kann und deshalb kein Druck (kN/cm²) berechenbar ist.

Die Kompaktierung sollte bevorzugt bei sehr niedrigen Linienkräften erfolgen. Die angewendeten Linienkräfte liegen im allgemeinen im untersten Bereich der kommerziell erhältlichen Geräte etwa zwischen 0,1 und 15 kN/cm. Die Haftkräfte innerhalb der Schülpen bestimmen mit den Bedingungen des nachfolgenden Siebgranulators (z.B. Flake Crusher der Firma Bepex GmbH, D-74211 Leingarten oder Firma Frewitt, Fribourg/Schweiz) die Größe des Vorgranulats (Keim) und das Verhältnis zwischen Keim und Pulver. Bevorzugt betragen die Linienkräfte 0,5 bis 10 kN/cm.

Durch dieses Verhältnis und die Verweilzeit bei der nachfolgenden Aufbaugranulation wird die optimale Teilchengröße der Granulate festgelegt. Dabei wird durch das richtige Verhältnis zwischen Vorgranulat und Pulver praktisch die gesamte Pigmentmenge in freifließendes, staubarmes Granulat überführt. Eine Rückführung von Über- und Unterkorn entfällt.

Diese Aufbaugranulation durch Nachrollen kann nach dem Stand der Technik auf handelsüblichen Drehtellern, Drageetrommeln oder Drehtrommeln vom Fachmann ohne weiteres durchgeführt werden.

Die Prüfung der Kunststoffdispergierbarkeit erfolgte nach einer der DIN 53 775: Prüfung von Farbmitteln in weichmacherhaltigen Poly-Polyvinylchlorid (PVC-P) Formmassenbestimmung der Dispergierhärte durch Walzen angenäherten Vorschrift. Das zu prüfende Pigment wird bei 160 ± 5°C auf einem Mischwalzwerk in PVC dispergiert. Das erhaltene Walzfell wird geteilt und die eine Hälfte anschließend durch Walzen bei Raumtemperatur erhöhten Scherkräften ausgesetzt. Als Maß für die Dispergierbarkeit gilt bei Buntpigmenten der Farbabstand ΔE nach CIELAB (DIN 5033, 6174) zwischen heiß- und kaltgewalztem PVC-Fell, bzw. bei Weißpigmenten die Differenz der Normfarbwerte Y (DIN 5033) zwischen heiß- und kaltgewalztem PVC-Fell. Ein gut dispergierbares Pigment ist schon bei geringen Scherkräften ausdispergiert, während zum Ausdispergieren eines schwer dispergierbaren Pigments die erhöhten Scherkräfte beim Walzen bei tiefer Temperatur notwendig sind. Daher gilt: je kleiner der Farbabstand ΔE bzw. die Differenz der Normfarbwerte Y, desto besser ist das Pigment dispergierbar. Insbesondere bei Granulaten kommt der Dispergierbarkeit eine große Bedeutung zu, da zuerst die Granulatteilchen zerteilt werden müssen, die dann im Kunststoff zu dispergieren sind. Angestrebt wird für Granulate eine gleich gute Dispergierbarkeit wie die entsprechender Pigmentpulver, so daß die Kenngrößen ΔE bzw. Y für Pulver und Granulat nicht wesentlich differieren sollen.

Als gut dispergierbar gelten nach dem Stand der Technik bei granulierten Weißpigmenten ein ΔY von 2,1 bis 3,0 Einheiten wie sie mit auf dem Markt befindlichen Handelsprodukten an TiO₂-Granulaten erzielt wird, z.B. Baytitan R-FK-21 oder bei Buntpigmenten ein ΔE von 0 bis 1 Einheiten wie es mit Bayferrox 130 (Handelsprodukt der Bayer AG) erzielt wird.

Die Prüfung des Fließverhaltens erfolgt durch Beurteilung des Auslaufverhaltens aus einem Trichter mit 300 bis 1000 ml Volumen mit 8 mm Öffnung. Das Fließverhalten wird als gut bezeichnet, wenn das Material frei ausläuft. Erfolgt kein Materialfluß bzw. ein Fließen nur nach Klopfen, wird das Fließverhalten als nicht ausreichend betrachtet.

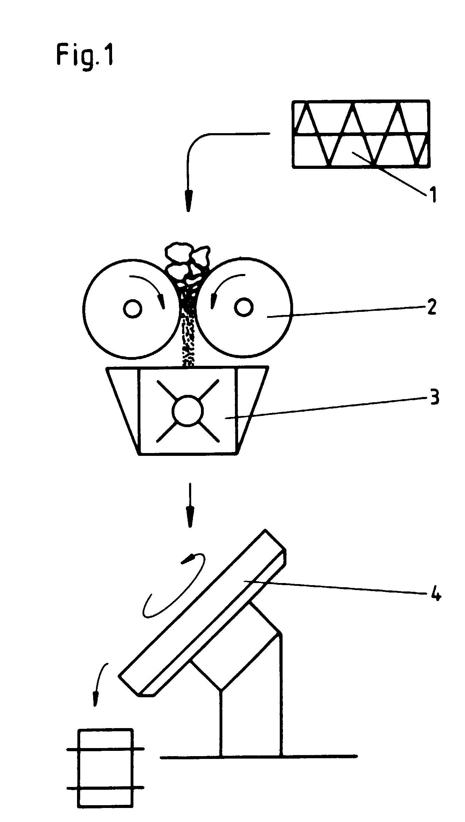

Beim erfindungsgemäßen Verfahren werden nacheinander verschiedene, als Einzelverfahren bekannte Granulierapparate in spezieller Abstimmung aufeinander in bestimmter Reihenfolge eingesetzt (Fig. 1). Dies sind Mischer (1), Kompaktor (2), Schroter (3) und Drehteller (4). Diese Einzelverfahren allein oder in anderen Kombinationen führen nicht zu den erfindungsgemäßen Granulaten mit den günstigen Eigenschaften hinsichtlich Ausbeute (praktisch kein Staubanteil), Fließverhalten, Förderbarkeit, Dispergierbarkeit, geringer Steuerungsaufwand bei der Herstellung. Dieses wird in der nachfolgenden Tabelle verdeutlicht, wobei die Summe der positiven Eigenschaften betrachtet werden soll (Tabelle 1).

Im folgenden wird anhand von Beispielen die vorliegende Erfindung erläutert, ohne daß in diesen Beispielen eine Einschränkung zu sehen ist.

### Beispiel 1

25 kg Eisenoxidrot Bayferrox 120 N (Handelsprodukt der Bayer AG) wurden mit 1,5 % (375 g) Silikonöl Baylube VP FE 3024 (Handelsprodukt der Bayer AG, kinematische Viskosität bei 40°C 60 mm²/s (DIN 51 562)) in einen Mischer gegeben und intensiv gemischt. Diese Mischung wurde in einem Kompaktor (Pharmapaktor Bepex 200/50,Fa. Bepex) bei einer Linienkraft von 2 kN/cm verdichtet. Es entstanden Schülpen von 2-3 mm Dicke. Diese Schülpen wurden in einem Siebgranulator (Fa. Frewitt, Fribourg/Schweiz) mit einem Sieb der Maschenweite 1,5 mm geschrotet. Das Vorgranulat wurde mit dem bei der Schrotung entstehenden Pulver auf einem Granulierteller von 70 cm Durchmesser und einer Verweilzeit von 7-10 Minuten granuliert. Das entstehende Granulat wies eine Korngröße von 0,2 bis 2 mm auf mit einem d₅₀ von 0,56 mm. Es war praktisch staubfrei, sehr gut rieselfähig und ausreichend transportstabil. Die Messung der Dispergierbarkeit in Kunststoffen ergab bei dem Granulat einen Farbabstand ΔE von 0,3 gegenüber einem Abstand von 0,2 beim entsprechenden Pigmentpulver.

### Beispiel 2

50 kg Vorprodukt für Titandioxid R-FK-2 (Handelsprodukt der Bayer AG) wurden unter Zusatz von 1,5 % (750 g) des obengenannten Silikonöls Baylube VP FE 3024 in einen Mischer gegeben und intensiv gemischt. Diese Mischung wurde in einem Kompaktor (Pharmapaktor Bepex 200/50,Fa. Bepex) bei einer Linienkraft von 4-7 kN/cm verdichtet. Es entstanden Schülpen von 2-3 mm Dicke. Diese Schülpen wurden in einem Siebgranulator (Fa. Frewitt, Fribourg/Schweiz) mit einem Sieb der Maschenweite 1,5 mm geschrotet. Das Vorgranulat wurde mit dem bei der Schrotung entstehenden Pulver auf einem Granulierteller von 70 cm Durchmesser und einer Verweilzeit von 7-10 Minuten granuliert.

Das entstehende Granulat wies eine Korngröße von 0,2 bis 2 mm auf mit einem d₅₀ von 0,5 mm. Es war praktisch staubfrei, sehr gut rieselfähig und ausreichend transportstabil.

Die Messung der Dispergierbarkeit in Kunststoffen ergab bei dem Granulat eine Differenz der Normfarbwerte Y von 1,7 gegenüber einem Abstand von 3,0 beim eingesetzten, ungranulierten Pigmentpulver.

### Beispiel 3

Jeweils 50 kg Vorprodukt für Titandioxid R-FK-21 (Handelsprodukt der Bayer AG) wurden wie in Beispiel 2 beschrieben unter Zusätzen von jeweils 1,5 % (750 g) der folgenden Öle granuliert:
a) Silikonöl Baylube VP FE 3024 (Handelsprodukt der Bayer AG, kinematische Viskosität bei 40°C 60 mm²/s (DIN 51 562)
b) Silikonöl Baysilone M 350 (Handelsprodukt der Bayer AG, kinematische Viskosität bei 25°C 350 mm²/s (DIN 51 562)
c) Maschinenöl V 100 (Schmieröl nach DIN 51 506 VDL, kinematische Viskosität bei 40°C 100 mm²/s).

Die entstehenden Granulate wiesen Korngrößen von 0,2 bis 2 mm auf. Sie waren praktisch staubfrei, sehr gut rieselfähig und ausreichend transportstabil. Die Messung der Dispergierbarkeit in Kunststoffen ergab bei dem Granulat Differenzen der Normfarbwerte Y von a) 1,1; b) 1,6; c) 1,3 gegenüber einem Abstand von 2,4 beim eingesetzten, ungranulierten Pigmentpulver.

### Beispiel 4

75 kg Chromoxid GN (Handelsprodukt der Bayer AG) wurden wie in Beispiel 1 beschrieben unter Zusatz von 3 % (2,25 kg) Maschinenöl V 100 (Schmieröl nach DIN 51 506 VDL, kinematische Viskosität bei 40°C 100 mm²/s) granuliert. Die Linienkraft im Kompaktierschritt betrug hierbei 3-4 kN/cm.

Das entstehende Granulat wies eine Korngröße von 0,2 bis 2 mm auf. Es war praktisch staubfrei, sehr gut rieselfähig und ausreichend transportstabil. Die Messung der Dispergierbarkeit in Kunststoffen ergab bei dem Granulat einen Farbabstand ΔE von 0,5 gegenüber einem Abstand von 0,3 beim entsprechenden Pigmentpulver.

### Beispiel 5

Jeweils 50 kg des Rutilmischphasenpigments Lichtgelb 6 R (Handelsprodukt der Bayer AG) wurden wie in Beispiel 1 beschrieben unter Zusatz von 3 % (1,5 kg) der obengenannten Öle Baylube VP FE 3024 und Maschinenöl V 100 granuliert.

Die entstehenden Granulate wiesen Korngrößen von 0,2 bis 2 mm auf. Sie waren praktisch staubfrei, sehr gut rieselfähig und ausreichend transportstabil.

### Vergleichsbeispiel 1

50 kg Vorprodukt für Titandioxid R-FK-21 (Handelsprodukt der Bayer AG) wurden wie in Beispiel 3 beschrieben, jedoch ohne Ölzusatz, granuliert.

Das entstehende Granulat wies Korngrößen von 0,2 bis 2 mm auf. Es war staubfrei und rieselfähig. Die Messung der Dispergierbarkeit in Kunststoffen ergab jedoch bei dem Granulat eine Differenz der Normfarbwerte Y von 4,8 gegenüber einem Abstand von 2,4 beim eingesetzten, ungranulierten Pigmentpulver.

### Vergleichsbeispiel 2

Titandioxid R-FK-21 (Handelsprodukt der Bayer AG), das über einen Sprühtrockner granuliert wurde, weist eine Korngröße von 40-300 µ auf mit einem d₅₀ von 120 µ und einem Feinanteil <100 µ zwischen 20 und 40 %. Die Messung der Dispergierbarkeit in Kunststoffen ergab bei dem Sprühgranulat eine Differenz der Normfarbwerte Y von 3,0.

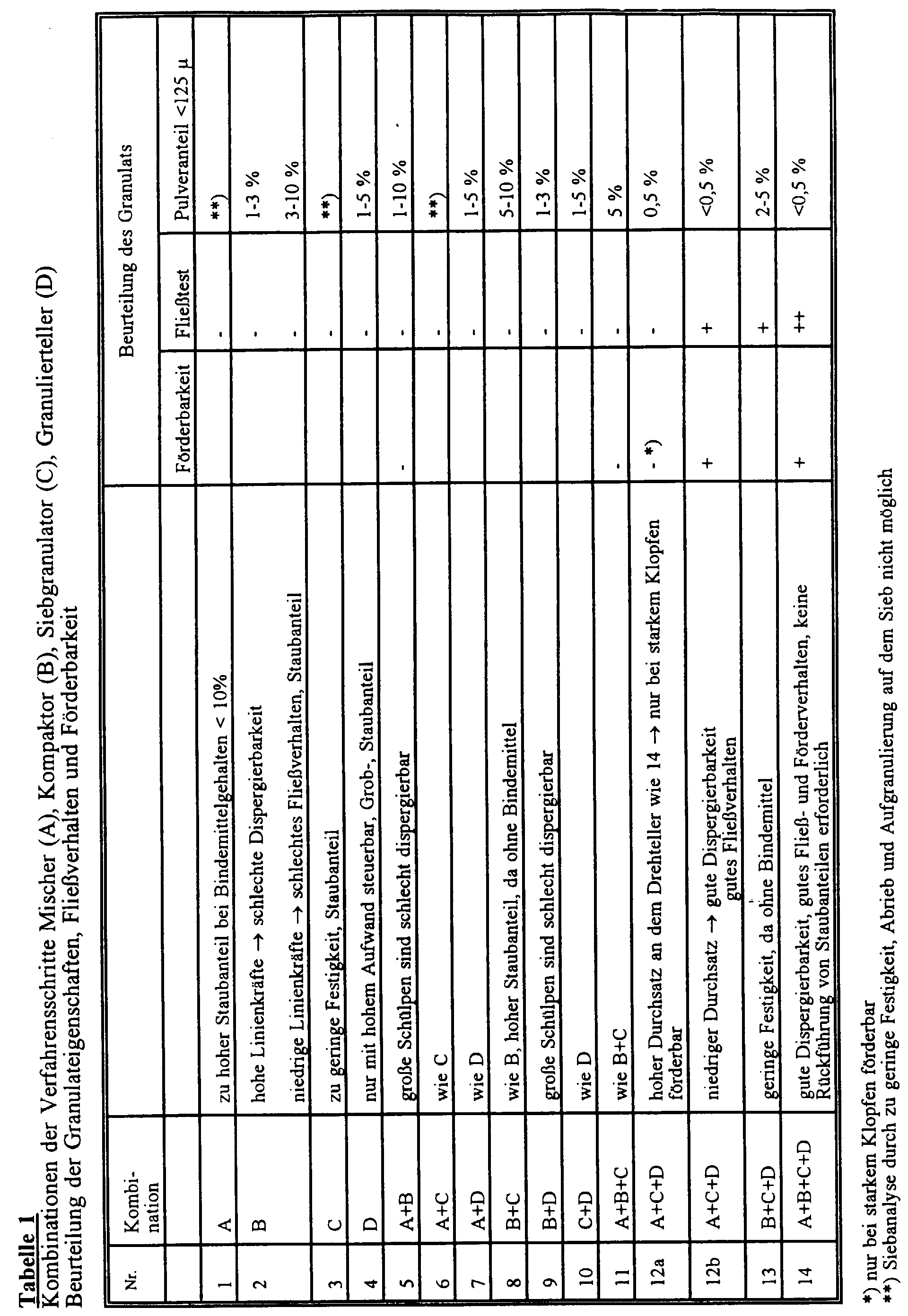

## Patentansprüche

1. Verfahren zum Einfärben von organischen Medien mit anorganischen Pigmentgranulaten, dadurch gekennzeichnet, daß anorganische Pigmente in einem mehrstufigen Verfahren unter Zusatz von Ölen, die eine kinematische Viskosität bei 40°C von 1,6 bis 1500 mm²/s aufweisen, als Bindemittel zu Pigmentgranulaten einer mittleren Teilchengröße von 0,2 bis 2 mm ohne Rückführung von Feinanteil granuliert werden, indem die anorganischen Pigmente mit den Ölen in einem Mischer zusammengegeben werden, das so vorbehandelte Pigmentpulver einem Kompaktierungsschritt mit Linienkräften zwischen 0,1 und 15 kN/cm unterworfen wird, die dabei entstehenden Schülpen einer Dichte von 0,5 bis 3,0 g/cm³ durch nachfolgendes Schroten auf einem Siebgranulator in Vorgranulat und Pulver zerlegt und diese durch Nachrollen auf einem Drehteller oder in einer Drehtrommel vollständig aufgranuliert werden, und die anorganischen Pigmentgranulate mit den organischen Medien vermischt werden.

2. Verfahren gemäß Anspruch 1, dadurch gekennzeichnet, daß die organischen Medien Kunststoffe sind.

3. Verfahren gemäß Anspruch 2, dadurch gekennzeichnet, daß die Kunststoffe Thermoplaste, Duroplaste und/oder Elastomere sind.

4. Verfahren gemäß Anspruch 1, dadurch gekennzeichnet, daß die organischen Medien Polymere mit gummielastischen Eigenschaften sind.

5. Verfahren gemäß Anspruch 1, dadurch gekennzeichnet, daß die Linienkräfte 0,5 bis 10 kN/cm betragen.

6. Verfahren gemäß einem oder mehreren der Ansprüche 1 bis 5, dadurch gekennzeichnet, daß als anorganische Pigmente Eisenoxid-, Titandioxid-, Chromoxid- und/oder Rutilmischphasenpigmente eingesetzt werden.

7. Verfahren gemäß einem oder mehreren der Ansprüche 1 bis 6, dadurch gekennzeichnet, daß als Öle Pflanzenöle, technische oder synthetische Öle paraffinischer oder naphthenischer Natur oder ölartige Verbindungen wie z.B. Silikonöle (Polysiloxane) in einer Menge von 0,01 bis 10 Gew.-%, bevorzugt 0,1 bis 6 Gew.-%, besonders bevorzugt 0,3 bis 4 Gew.-%, eingesetzt werden.

8. Verfahren gemäß einem oder mehreren der Ansprüche 1, 2, 5 bis 7, dadurch gekennzeichnet, daß die Pigmentgranulate mit flüssigen Kunststoffen vermischt werden.

9. Verfahren gemäß einem oder mehreren der Ansprüche 1, 2, 5 bis 7, dadurch gekennzeichnet, daß die Pigmentgranulate zur Herstellung von Pulverlacken eingesetzt werden.

## Claims

1. Process for the colouration of organic media with granulated inorganic pigments, characterised in that inorganic pigments are granulated in a multistage process with the addition of oils having a kinematic viscosity at 40 °C of 1.6 to 1500 mm²/s as binders to granulated pigments of an average particle size of 0.2 to 2 mm without the recycling of a fines component, by placing the inorganic pigments together with the oils in a mixer, by subjecting the pigment powder thus pretreated to a compacting stage with line forces of between 0.1 and 15 kN/cm, by breaking down the flakes of a density of 0.5 to 3.0 g/cm³ formed in the course of this by subsequent rough grinding on a screen granulator into pregranulate and powder and completely pelletizing these by rerolling on a rotating pan or in a rotating drum, and by mixing the inorganic pigment granules with the organic media.

2. Process according to Claim 1, characterised in that the organic media are plastics.

3. Process according to Claim 2, characterised in that the plastics are thermoplastics, thermosetting plastics and/or elastomers.

4. Process according to Claim 1, characterised in that the organic media are polymers with elastomeric properties.

5. Process according to Claim 1, characterised in that the line forces amount to 0.5 to 10 kN/cm.

6. Process according to one or more of Claims 1 to 5, characterised in that iron oxide pigments, titanium dioxide pigments, chromic oxide pigments and/or rutile mixed-phase pigments are used as inorganic pigments.

7. Process according to one or more of Claims 1 to 6, characterised in that vegetable oils, technical or synthetic oils of paraffinic or naphthenic nature or oily compounds such as, for example, silicone oils (polysiloxanes) are used in an amount of 0.01 to 10 wt.%, preferably 0.1 to 6 wt.%, most preferably 0.3 to 4 wt.%.

8. Process according to one or more of Claims 1, 2, and 5 to 7, characterised in that the granulated pigments are mixed with liquid synthetic materials.

9. Process according to one or more of Claims 1, 2, and 5 to 7, characterised in that the granulated pigments are used for the production of powder coatings.

## Revendications

1. Procédé de coloration de milieux organiques au moyen de granulés de pigments inorganiques, caractérisé en ce que les pigments inorganiques sont transformés par un procédé en plusieurs étapes, avec addition, comme liant, d'huiles présentant une viscosité cinématique de 1,6 à 1500 mm²/s à 40 °C, en granulés pigmentaires d'une granulométrie moyenne de 0,2 à 2 mm, sans retour des fines, les pigments inorganiques étant mis en présence des huiles dans un mélangeur, la poudre pigmentaire ainsi prétraitée étant soumise à une étape de compactage avec application de forces linéaires comprises entre 0,1 et 15 kN/cm, les flocons résultants, d'une densité de 0,5 à 3,0 g/cm³, étant désagrégés en prégranulé et en poudre au cours d'une étape suivante de broyage sur un granulateur à tamis, puis entièrement granulés par roulage subséquent sur un plateau tournant ou dans un tambour rotatif, et les granulés de pigments inorganiques étant mélangés avec les milieux organiques.

2. Procédé selon la revendication 1, caractérisé en ce que les milieux organiques sont des matières synthétiques.

3. Procédé selon la revendication 2, caractérisé en ce que les matières synthétiques sont des thermoplastiques, des résines thermodurcissables et/ou des élastomères.

4. Procédé selon la revendication 1, caractérisé en ce que les milieux organiques sont des polymères aux propriétés de gomme élastique.

5. Procédé selon la revendication 1, caractérisé en ce que les forces linéaires sont de 0,5 à 10 kN/cm.

6. Procédé selon une ou plusieurs des revendications 1 à 5, caractérisé en ce que les pigments inorganiques mis en oeuvre sont des pigments d'oxyde de fer, de dioxyde de titane, d'oxyde de chrome et/ou des pigments de rutile à phase mixte.

7. Procédé selon une ou plusieurs des revendications 1 à 6, caractérisé en ce que les huiles mises en oeuvre sont des huiles végétales, des huiles industrielles ou synthétiques de nature paraffinique ou naphténique ou des composés oléiformes tels que, p. ex., les huiles silicones (polysiloxanes) et en ce qu'elles sont mises en oeuvre dans une quantité de 0,01 à 10 % en poids, de préférence de 0,1 à 6 % en poids, une quantité de 0,3 à 4 % en poids étant particulièrement préférée.

8. Procédé selon une ou plusieurs des revendications 1, 2, 5 à 7, caractérisé en ce que les granulés pigmentaires sont mélangés avec des matières synthétiques à l'état fluide.

9. Procédé selon une ou plusieurs des revendications 1, 2, 5 à 7, caractérisé en ce que les granulés pigmentaires sont mis en oeuvre pour préparer des laques en poudre.
